# FASCICULE DE BREVET EUROPEEN

(11) **EP 2 140 751 B1**
(45) Date de publication et mention de la délivrance du brevet: **22.02.2012**
(21) Numéro de dépôt: 09290392.1
(22) Date de dépôt: 27.05.2009
(51) Int. Cl.: A01D 46/00

(54) **Dispositif et système de récolte de fruits par soufflage canalisé circulaire**
Vorrichtung und System zur Obsternte durch kanalisiertes Blasen im Kreis
Device and system for harvesting fruit by circular channelled air discharge

(30) Priorité: 04.07.2008 FR 0803818
(43) Date de publication de la demande: 06.01.2010
(73) Titulaire: Ste des Anciens Etablissements Fremont, 30820 Caveirac (FR)
(72) Inventeur: Cartier-Michaud, Raymond, 47300 Villeneuve (FR); Firmin, Grégory, 30000 Nimes (FR); Pelisse, François, 94100 Saint-Maur-des Fossés (FR)
(74) Mandataire: Rataboul, Xavier

(56) Documents cités:
- FR-A- 2 234 847
- US-A- 3 455 502
- US-A- 3 943 688
- US-A- 5 622 036

## Description

L'invention se rapporte à un dispositif et à un système de récolte de fruits par soufflage canalisé circulaire.

Traditionnellement, la récolte des fruits sur les arbres fruitiers se fait par une cueillette manuelle.

Les producteurs de fruits ont développé depuis longtemps des systèmes mécanisés de récolte. A titre d'exemple, on peut citer la récolte par vibration : une pince, en prise autour du tronc de l'arbre, est reliée à un excentrique couplé avec la prise de force d'un tracteur. Cet excentrique transforme le mouvement rotatif de la prise de force, en un mouvement horizontal alternatif qui secoue l'arbre.

Ce procédé et ce dispositif présentent de nombreux inconvénients. Ils ne sont pas applicables à tous les arbres. Certains arbres sont, en effet, trop fragiles pour résister au secouage, par exemple en raison de leur jeune âge ou de la nature de leur bois. En outre, ce procédé entraîne des blessures du tronc et déstabilise les racines. Ce procédé ne permet pas de récolter uniquement les fruits mûrs : il est si puissant que même les fruits trop jeunes, pas encore mûrs, tombent de l'arbre. Enfin, le secouage nécessite un positionnement précis du tracteur sous chaque arbre et une activation/désactivation périodique de la pince, ce qui pénalise la durée de récolte.

Pour résoudre ce problème, il a déjà été proposé un procédé de récolte par soufflage sur les arbres.

A titre d'exemple, on peut citer le dispositif du brevet US 3,943,688. Ce dispositif comprend deux ventilateurs connectés à une chambre d'éjection d'air munie d'une colonne de déflecteurs pivotants. Les ventilateurs et la chambre sont fixés à un chariot mobile. Lorsque les ventilateurs fonctionnent, l'air est pulsé à travers la colonne, et sur toute la hauteur de la colonne, vers les arbres. Les déflecteurs pivotent périodiquement, de manière à provoquer une éjection d'air selon un mouvement vertical alternatif. Le nombre de ventilateurs et l'angle de pivotement des déflecteurs doivent être adaptés à la hauteur des arbres pour être sûr de pouvoir souffler sur toute leur hauteur. En outre, les ventilateurs sont en prise avec une transmission commune entraînée par un moteur.

Un tel dispositif présente de nombreux inconvénients. En effet, il est apparu que la transmission entre les ventilateurs constitue un danger rédhibitoire pour les utilisateurs.

Le dispositif présente également une instabilité importante due à l'empilement des ventilateurs. Cette instabilité est gênante en utilisation dans un champ de sorte que ce dispositif ne peut être utilisé dans des vergers présentant un dévers.

De plus, malgré les déflecteurs et l'utilisation de plusieurs ventilateurs superposés les uns sur les autres, la perte de charge est si importante que le flux d'air est peu efficace et ne permet pas une pénétration de l'air au coeur de l'arbre, c'est-à-dire jusqu'au tronc.

Par ailleurs, la consommation énergétique d'un tel dispositif est importante en raison du nombre de ventilateurs et de leur puissance nécessaire. La puissance transmise par la seule prise de force du tracteur est donc insuffisante, et un moteur indépendant est utilisé pour entrainer chaque ventilateur.

En outre, la faible efficacité du système, due à la consommation énergétique élevée et à la perte de charge importante, oblige le tracteur à avancer lentement pour optimiser le temps d'impact de l'air sur le branchage des arbres. Par conséquent, la récolte des fruits dans un verger entier peut prendre plusieurs semaines. Or, la récolte des fruits mûrs doit se faire le plus rapidement possible pour éviter qu'une quantité importante de fruits ne pourrisse sur l'arbre ou tombe naturellement au sol sans qu'il soit possible de les récupérer automatiquement.

Enfin, ce dispositif est peu fiable en raison de son usure rapide due au mouvement alternatif oscillant des déflecteurs et des nombreuses pièces en mouvement lors de l'utilisation.

Le document US 3 455 502 décrit un dispositif de soufflage muni d'une tête de soufflage constituée par des tubes courbes télescopiques qui sont déployés grâce à un mécanisme externe pivotant comprenant une poulie et un câble. Il en découle que la tête de soufflage est animée d'un mouvement angulaire alternatif pour éviter d'enrouler et de casser le câble. Le système externe de câble et poulie constitue un danger rédhibitoire pour les utilisateurs lors de l'utilisation. En outre, ce dispositif est peu fiable en raison de son usure rapide due au mouvement alternatif oscillant des nombreuses pièces en mouvement lors de l'utilisation.

La présente invention vise donc à proposer un dispositif sûr, fiable, efficace, suffisamment polyvalent pour pouvoir être utilisé dans un grand nombre de vergers, et présentant une consommation énergétique minimale.

Pour remédier aux inconvénients des solutions connues, la présente invention propose un dispositif muni de moyens d'accélération du flux d'air émis par un ventilateur, l'air étant expulsé vers les arbres selon un mouvement rotatif continu et dirigé vers l'arbre.

A cette fin, l'invention a pour objet un dispositif de soufflage pour la récolte de fruits portés par le branchage d'arbres fruitiers, comprenant un ventilateur connecté à un conduit d'air terminé par une tête de soufflage, montée rotative autour d'un axe de rotation, et munie d'au moins une buse comprenant une entrée d'admission d'air provenant du conduit d'air, un tube et une sortie d'air, le dispositif comprenant, entre le ventilateur et la sortie d'air de la buse, au moins une structure convergente d'accélération de l'air.

Dans la suite de la description, on entend par « structure convergente » toute structure présentant, dans le sens d'écoulement de l'air, une diminution régulière de la section de passage de l'air. La structure convergente la plus simple est un tronc de cône.

A l'inverse, une structure divergente présente, dans le sens d'écoulement de l'air, une augmentation régulière de la section de passage de l'air.

Grâce à la structure convergente, l'air pulsé par le ventilateur est accéléré et peut atteindre le coeur de l'arbre.

Un dispositif selon l'invention peut donc comprendre, dans le sens d'écoulement de l'air, au moins une structure convergente suivie d'une portion droite, au moins une portion droite suivi d'une structure convergente ou au moins une structure convergente suivie d'une structure divergente. Ce dernier agencement forme une tuyère.

On entend par portion droite, une portion présentant une section de passage de l'air constante.

Selon d'autres modes de réalisation :
- ladite au moins une buse peut être agencée de manière divergente par rapport à l'axe de rotation pour diriger l'air, en utilisation, sur sensiblement toute la hauteur et la largeur du branchage ;
- le tube de la buse peut comprendre une section convergente ;
- le tube de la buse peut comprendre une section divergente ;
- l'entrée d'admission d'air de la ou de chaque buse peut être disposée au plus près de l'axe de rotation de la tête de soufflage ;
- le ventilateur peut être de type centrifuge et comprendre une roue montée rotative selon un axe de rotation, et un carter de diffusion connecté au conduit d'air ;
- le dispositif peut être destiné à être actionné par une prise de force d'un tracteur, le ventilateur étant agencé pour que, en utilisation, l'axe de rotation de la roue du ventilateur soit sensiblement parallèle à l'axe de rotation de la prise de force du tracteur ;
- le conduit d'air peut comprendre une première portion sensiblement perpendiculaire à l'axe de rotation de la roue du ventilateur et connectée avec le carter, une deuxième portion coudée ainsi qu'une troisième portion sensiblement perpendiculaire à la première portion et connectée à la tête de soufflage rotative ;
- la première portion peut comprendre une partie tubulaire souple, fixée de manière étanche, par une première extrémité, au carter du ventilateur et, par une deuxième extrémité, à la deuxième portion coudée, la deuxième extrémité de la partie tubulaire souple étant montée coulissante sur une structure de guidage, pour modifier la position relative de la première et de la deuxième extrémité de la partie tubulaire souple ;
- la partie tubulaire souple peut être un soufflet ;
- le dispositif peut comprendre, en outre, un moyen de réglage de la position relative de la première et de la deuxième extrémité de la partie tubulaire souple ;
- la première portion du conduit d'air peut être connectée au carter du ventilateur de manière rotative ;
- la troisième portion du conduit d'air peut comprendre une structure convergente ; et/ou
- la tête de soufflage rotative peut être en prise avec un arbre d'entrainement, coaxial avec l'axe de rotation de la tête de soufflage, et entrainé par un moteur.

Grâce aux buses disposées de manière divergentes par rapport à l'axe de rotation de la tête de soufflage, le dispositif selon l'invention permet à l'air d'être dirigé sur toute la hauteur et la largeur du branchage de l'arbre, tout en limitant les pertes de charge entre le ventilateur et les buses.

L'invention se rapporte également à un système de soufflage comprenant un dispositif de soufflage précédent, disposé sur un châssis muni de roues et d'un moyen de fixation à un véhicule de tractage.

Selon d'autres modes de réalisation :
- le châssis peut comprendre des bras pivotants munis de filets de récolte ;
- les bras peuvent être télescopiques ; et/ou
- le châssis peut comprendre un moteur d'entraînement du ventilateur.

D'autres caractéristiques de l'invention seront énoncées dans la description détaillée ci-après faite en référence aux figures annexées qui représentent, respectivement :
- la figure 1, une vue schématique en plan d'un dispositif de soufflage selon l'invention ;
- la figure 2, une vue schématique en coupe d'un mode de réalisation de la tête de soufflage du dispositif de la figure 1 ;
- la figure 3, une vue schématique en perspective arrière de la tête de soufflage de la figure 2 ;
- la figure 4, une vue schématique en coupe d'un autre mode de réalisation d'une tête de soufflage en prise avec un arbre d'entrainement ;
- la figure 5, une vue schématique en plan d'un dispositif de soufflage selon l'invention en position d'utilisation ;
- la figure 6, une vue schématique en plan du balayage circulaire continu des arbres par les buses ; et
- la figure 7, une vue schématique d'une variante du dispositif de soufflage selon l'invention, comprenant un conduit d'air réglable en hauteur.

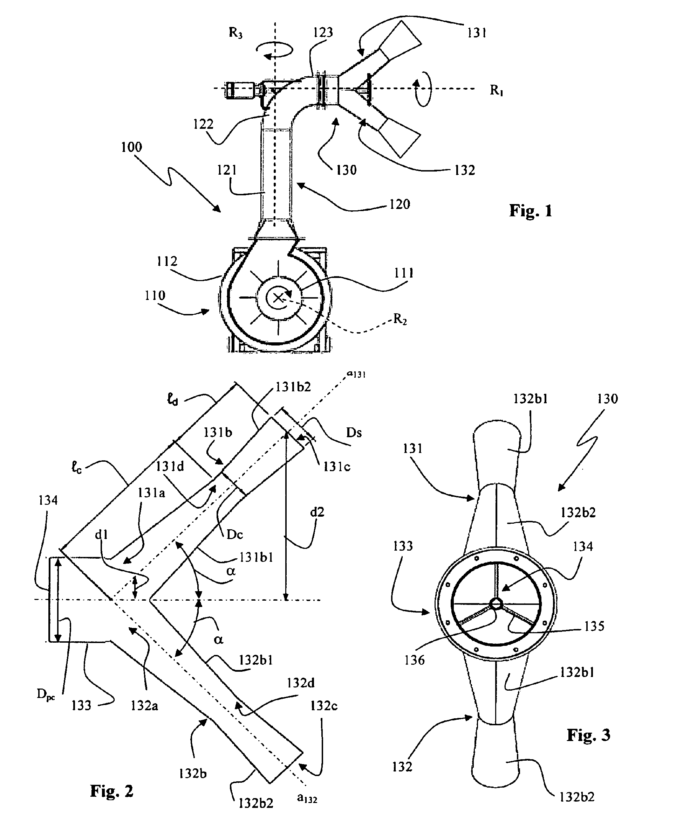

La figure 1 illustre un dispositif de soufflage 100 selon l'invention, comprenant un ventilateur 110 connecté à un conduit d'air tubulaire 120 terminé par une tête de soufflage 130, montée rotative de manière continue autour d'un axe de rotation R₁.

On entend par rotation continue, le fait que la tête de soufflage puisse effectuer une multitude de rotations successives, dans le même sens de rotation, sans avoir à réaliser une ou plusieurs rotations dans le sens inverse. Autrement dit, la tête de soufflage n'est pas animée d'un mouvement alternatif, dans un sens de rotation puis dans le sens inverse.

De manière préférentielle, le ventilateur 110 est de type centrifuge et comprend une roue 111 montée rotative selon un axe de rotation R₂, et un carter de diffusion 112 connecté au conduit d'air 120.

On entend par ventilateur centrifuge, un ventilateur dans lequel l'expulsion de l'air se fait sensiblement perpendiculairement par rapport à l'axe de rotation R₂ de la roue 111 du ventilateur 110, par opposition à un ventilateur de type axial dans lequel l'expulsion de l'air se fait sensiblement parallèlement à l'axe de rotation de la roue du ventilateur.

Le conduit d'air 120, illustré en figure 1, comprend une première portion 121, sensiblement perpendiculaire à l'axe de rotation R₂ de la roue 111 du ventilateur, et connectée avec le carter 112. Cette première portion 121 permet de canaliser l'air issu du carter 112 du ventilateur 110.

Le conduit d'air 120 comprend également une deuxième portion coudée 122, ainsi qu'une troisième portion 123, sensiblement perpendiculaire à la première portion 121, et connectée à la tête de soufflage rotative 130.

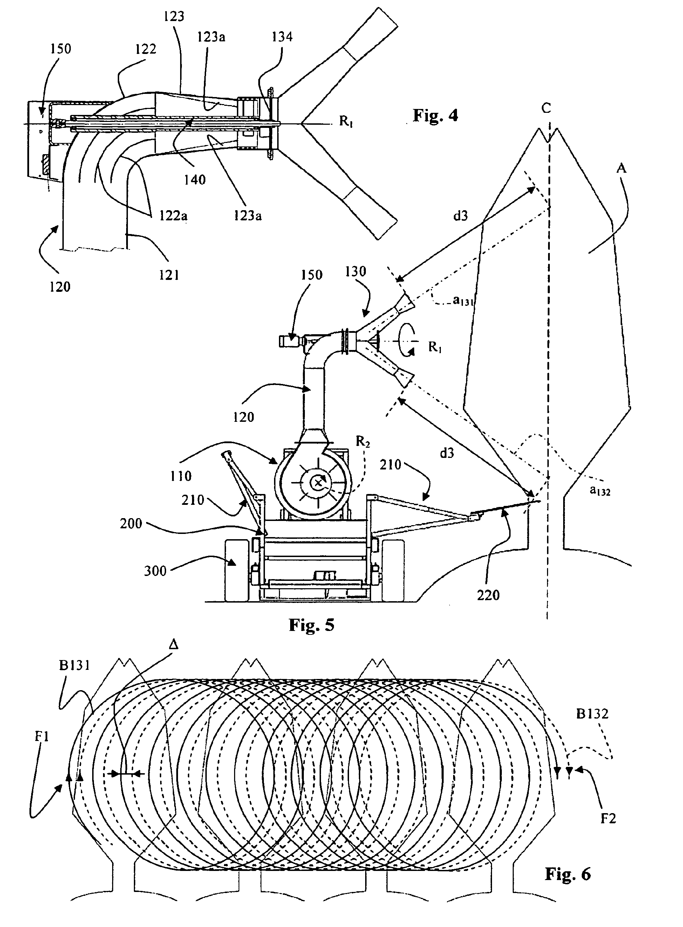

En position d'utilisation, la première portion 121 est sensiblement verticale, la troisième portion 123 est sensiblement horizontale et le dispositif de soufflage 100 est agencé de telle sorte que la tête de soufflage 130 soit dirigée vers l'arbre A (voir la figure 5).

De préférence, la première portion 121 est connectée au carter 112 de manière fixe.

Alternativement, la première portion 121 est connectée au carter 112 de manière rotative selon un axe de rotation R₃. Ainsi, il suffit de faire pivoter le conduit d'air 120 selon l'axe de rotation R₃ pour orienter la tête de soufflage d'un côté ou de l'autre du dispositif, c'est-à-dire vers la gauche ou vers la droite de la figure 1.

Il est ainsi possible de procéder à la récolte de fruits portés par des arbres situé d'un côté ou de l'autre du dispositif de soufflage sans avoir à faire pivoter l'ensemble du dispositif.

La tête de soufflage 130 comprend, dans l'exemple illustré, deux buses 131-132 sensiblement rectilignes, et une partie de connexion 133 à la troisième portion 123 du conduit 120. Cette partie de connexion 133 est de préférence cylindrique de manière à ce que la tête de soufflage puisse entrer en rotation continue par rapport à la troisième portion 123 du conduit 120.

Si la troisième portion 123 a une section polygonale (carrée, rectangulaire, etc.), une pièce d'adaptation, de type « profilé rond-carré » lorsque la section polygonale est carrée, est nécessaire entre le conduit d'air et la partie de connexion 133 d'adaptation pour raccorder la section polygonale de la troisième portion 123 à la section circulaire de la tête de soufflage et permettre la rotation continue de la tête de soufflage. Cette pièce d'adaptation peut elle-même être convergente pour accélérer l'air.

Comme illustré en figure 2, chaque buse 131-132 comprend un axe de symétrie rectiligne a₁₃₁-a₁₃₂, une entrée 131a-132a d'admission d'air provenant du conduit d'air (non représenté sur la figure 2), un tube 131b-132b et une sortie d'air 131c-132c.

Conformément à l'invention, le dispositif de soufflage comprend, entre le ventilateur et la sortie d'air de la buse, et dans le sens de circulation de l'air, au moins une structure convergente d'accélération de l'air.

Dans l'exemple illustré, c'est le tube de chaque buse qui comprend cette section convergente 131b1-132b1. En outre, le tube de chaque buse comprend une section divergente 131b2-132b2. La jonction de la section convergente et de la section divergente de chaque buse forme un col 131d-132d. Dans ce mode de réalisation, les buses forment donc des tuyères.

L'utilisation d'une ou plusieurs buse(s) formant tuyère permet d'augmenter sensiblement la vitesse de l'air.

Selon l'invention, les buses 131-132 sont agencées les unes par rapport aux autres pour que l'air provenant du conduit d'air soit réparti de manière sensiblement égale entre les buses tout en limitant la perte de charge.

Le choix de la longueur ℓ_{c} des sections convergentes, de la longueur ℓ_{d} d es sections divergentes, et des diamètres de la partie de connexion 133, du col de tuyère 131d-132d et de la sortie d'air 131c-132c, permet de contrôler précisément la vitesse de sortie de l'air et la surface d'impact sur l'arbre A.

À titre d'exemple de dimensionnement, la longueur ℓ_{c} de la section convergente est choisie égale à 502 mm, la longueur ℓ_{d} de la section divergente est choisie égale à 270 mm, le diamètre D_{pc} de la partie de connexion 133 est choisi égal à 273 mm, le diamètre D_{c} du col de tuyère est choisi égal à 106 mm et le diamètre Dₛ de la sortie d'air est choisi égal à 138 mm.

Selon l'invention, les buses sont agencées de manière divergente par rapport à l'axe de rotation R₁ de la tête de soufflage, c'est-à-dire que leur axe de symétrie a₁₃₁-a₁₃₂ forme un angle a avec l'axe de rotation R₁, les axes de symétries a₁₃₁-a₁₃₂ des buses étant sécants avec l'axe de rotation R₁ de la tête de soufflage. Autrement dit, chaque buse est agencée de manière à ce qu'une première distance d1 au niveau de l'entrée d'air 131a-132a et entre l'axe de symétrie a₁₃₁-a₁₃₂ et l'axe de rotation R₁ de la tête de soufflage est inférieure à une deuxième distance d2 au niveau de la sortie d'air 131c-132c et entre l'axe de symétrie a₁₃₁-a₁₃₂ et l'axe de rotation R₁.

Les entrées d'admission d'air des buses sont au plus près de l'axe de rotation R₁, ce qui permet de minimiser les pertes de charge. La distance d1 est donc minimale.

L'angle α entre une buse et l'axe de rotation R₁ est choisi de telle sorte que, d'une part, l'air provenant du conduit d'air subisse une perte de charge minimale et, d'autre part, que l'arbre puisse être balayé de manière continue, en utilisation, sur sensiblement toute la hauteur et la largeur du branchage portant les fruits.

De préférence, l'angle α est choisi sensiblement égal à 45°. Ainsi, lorsque la tête de soufflage comprend deux buses, l'angle formé entre les deux buses est de 90°.

L'air expulsé par les buses balaye donc l'arbre de manière circulaire et continue, sur toute la hauteur et la largeur du branchage, lorsque la tête de soufflage tourne.

Pour que la tête de soufflage soit entraînée en rotation continue, un mode de réalisation de l'invention, illustré en figure 3, prévoit un moyen de support en rotation 134 de la tête de soufflage 130.

Le moyen de support 134 illustré comprend des montants 135 reliant la partie de connexion 133 de la tête de soufflage 130 à un moyeu de fixation 136. Ce moyeu de fixation 136 est destiné à être fixé à un arbre d'entraînement en rotation continue. Il est situé au centre de la partie de connexion 133, sur l'axe de symétrie de la partie de connexion 133. Autrement dit, il est situé de manière coaxiale avec l'axe de rotation R₁.

La figure 4 illustre la tête de soufflage connectée au conduit 120, représenté partiellement, et en prise avec un arbre d'entraînement 140 relié soit à l'entrainement du ventilateur, soit, de manière préférentielle, à un moteur 150 fixé au conduit d'air 120.

Ce moteur 150 est alors indépendant du moteur d'entraînement du ventilateur 110. De manière préférentielle, le moteur 150 est électrique.

Il n'existe donc aucune transmission entre le moteur d'entraînement du ventilateur 110 et l'arbre d'entraînement 140 de la tête de soufflage 130.

Selon l'invention, le mécanisme d'entraînement de la tête de soufflage doit permettre une rotation continue.

Selon un exemple de réalisation préféré, l'arbre d'entraînement 140 est disposé à l'intérieur de la troisième portion 123 du conduit d'air 120.

Cet agencement permet non seulement une rotation continue de la tête de soufflage, mais également de supprimer les risques de blessures dues à une transmission extérieure et de limiter le nombre de pièces mécaniques en mouvement.

La troisième portion 123 du conduit d'air 120 à laquelle est connectée la tête de soufflage 130 peut présenter une structure convergente 123a. Autrement dit, l'air provenant de la portion coudée 122 du conduit d'air est concentré par la troisième portion 123, grâce à la structure convergente 123a, vers la tête de soufflage et les buses.

Si le conduit d'air 120 et, en particulier, la portion coudée 122, ont une section polygonale (carrée, rectangulaire, etc.), la troisième portion 123 peut être conformée en pièce d'adaptation pour raccorder la section polygonale du conduit d'air à la section circulaire de la tête de soufflage. Ceci permet la rotation de la tête de soufflage.

La structure convergente 123a permet d'augmenter et de contrôler la vitesse de l'air à la sortie du dispositif selon l'invention.

Cette structure convergente peut être utilisée seule, c'est-à-dire que les buses sont des tubes réguliers, ou en combinaison avec des tuyères, c'est-à-dire que les tubes des buses comprennent une partie convergente, un col de tuyère et une partie divergente.

Par ailleurs, la section coudée 122 peut comprendre des pales longitudinales 122a, c'est-à-dire suivant le coude 122. Les pales 122a sont des éléments plans courbés séparant, verticalement ou horizontalement, la lumière de la section coudée 122 du conduit d'air 120. Ces pales 122a permettent de diminuer les pertes de charge de l'air transporté dans le conduit.

Comme illustré en figure 5, le dispositif de soufflage selon l'invention est disposé, de préférence, sur un châssis 200 muni de roues 300 et d'un moyen de fixation à un véhicule de tractage de type tracteur (non représenté).

Grâce à la structure du dispositif selon l'invention permettant une expulsion d'air accélérée tout en limitant les pertes de charge, le ventilateur 110 du dispositif de soufflage peut être actionné par la prise de force d'un tracteur.

À cette fin, le ventilateur 110 est agencé sur le châssis 200 pour que, en utilisation, l'axe de rotation R₂ de la roue 111 du ventilateur soit sensiblement parallèle à l'axe de rotation de la prise de force du tracteur. De cette manière, le ventilateur peut être entraîné par la prise de force du tracteur par l'intermédiaire d'un cardan.

De préférence, le dispositif de soufflage est monté sur le châssis de telle sorte que le ventilateur 110 soit en position centrale par rapport à l'axe de la remorque, le plus bas possible pour abaisser le centre de gravité de l'ensemble. Ceci améliore sensiblement la stabilité du système.

Il est alors possible d'utiliser le dispositif de soufflage selon invention dans des vergers présentant une pente relativement importante, vergers dans lesquels les dispositifs de l'état de la technique auraient été inutilisables car trop instables.

Par ailleurs, la position basse du ventilateur permet de diminuer l'angle que fait le cardan entre la prise de force et l'axe du ventilateur, ce qui améliore le rendement de la transmission par la prise de force du tracteur.

Le dispositif de soufflage selon invention permet donc une meilleure stabilité tout en soufflant de l'air à forte vitesse, avec une perte de charge minimisée et un rendement énergétique optimisé.

Grâce à ce système, la récolte des fruits portés par le branchage d'arbres est également sensiblement améliorée. En effet, le dispositif selon invention permet un balayage circulaire continu de l'arbre, sur toute la hauteur et la largeur du branchage (voir figure 6). Aucune zone du branchage ne risque d'échapper au souffle d'air.

La vitesse de rotation de la tête de soufflage est choisie par rapport à la vitesse de déplacement du tracteur pour que chaque arbre subisse plusieurs balayages sensiblement circulaires, alors que le système se déplace par rapport aux arbres.

Ces vitesses sont adaptées en fonction de la phase de récolte : par exemple, on choisit une vitesse de balayage et une vitesse de déplacement rapides au début de la récolte pour ne faire tomber que les fruits physiologiquement mûrs. Au milieu de la période de récolte, le nombre de fruits physiologiquement mûrs est important. On pourra, alors, choisir par exemple une vitesse de balayage et une vitesse de déplacement plus lentes pour que tous ces fruits tombent.

A titre d'exemple, la tête de soufflage dont les dimensions ont été données précédemment est mise en rotation à environ 80 tours par minute, et le dispositif est déplacé parallèlement aux arbres jusqu'à environ 4 kilomètres par heure.

Le tracteur peut donc se déplacer beaucoup plus rapidement qu'avec les dispositifs de l'État de la Technique et la récolte des fruits physiologiquement mûrs peut se faire plus rapidement et permet d'éviter qu'une quantité importante de fruits ne soit pas récoltée.

Ainsi, en figure 6, la ligne B131, en trait plein, schématise le balayage des arbres par la buse 131. La ligne B132, en tirets, schématise le balayage des arbres par la buse 132.

Ces balayages circulaires décalés sont le résultat de la combinaison de la rotation continue rapide des buses et du déplacement linéaire du système de soufflage selon l'invention par le tracteur.

En outre, chaque zone de l'arbre est balayée sensiblement deux fois de suite (avec tout de même un léger décalage Δ dû à l'avancement du tracteur) : une fois de manière ascendante (sens de la flèche F1), l'autre fois de manière descendante (sens de la flèche F2). Ceci est obtenu que la tête de soufflage soit munie d'une ou de plusieurs buses.

D'autre part, le flux d'air est relativement ponctuel au niveau de l'impact sur les arbres et se déplace rapidement sur la hauteur mais aussi sur la largeur du branchage de l'arbre.

Un phénomène de fouettage des branches est alors obtenu.

La disposition divergente des buses est importante pour que le fouettage ait lieu sur la hauteur et la largeur du branchage et non sur une partie seulement de l'arbre.

Avec des vitesses de balayage et de déplacement adaptées, le phénomène de fouettage des branches permet aux fruits mûrs de se décrocher des branches, mais évite que les fruits trop jeunes ne se décrochent.

Les fruits mûrs tombent sensiblement verticalement, avec peu de risque d'être entrainés, par le souffle, de l'autre côté de l'arbre par rapport au dispositif de soufflage. En effet, grâce au fait que le souffle ne percute que momentanément une zone ponctuelle de l'arbre, lorsque le fruit tombe, il ne rencontre plus le souffle d'air.

Le dispositif selon l'invention permet donc une récolte facile puisque le fruit n'est soumis qu'à la gravité après avoir été décroché de sa branche. Il tombe alors au pied de l'arbre sans subir le souffle du dispositif.

En complément, on peut prévoir que deux systèmes selon l'invention sont disposés en miroir, de part et d'autre d'une rangée d'arbres, et se déplacent en même temps et dans le même sens. Cela permet à un système de récupérer des fruits qui auraient dû tomber du côté de l'autre système, mais qui ont été éventuellement propulsés par le jet d'air ou qui ont rebondi sur des branches ou des feuilles.

D'autre part, la vitesse de l'air à la sortie des buses est un facteur important pour permettre une récolte efficace tout en préservant l'intégrité des fruits.

À titre d'exemple, la demanderesse a constaté qu'une vitesse de l'air efficace pour récolter des prunes sans les endommager doit être d'environ 20 mètres par seconde au coeur de l'arbre, illustré par l'axe C.

Le dispositif selon l'invention, muni d'une structure convergente, permet d'obtenir une telle vitesse au coeur de l'arbre tout en utilisant un ventilateur classique. Les buses formant tuyère sont, à ce titre, particulièrement efficaces.

À titre d'exemple, des tests ont été menés, pour la récolte de prunes, en utilisant des buses formant tuyère présentant les dimensions données précédemment (ℓ_{c} égale à 502 mm, ℓ_{d} égale à 270 mm, D_{pc} égal à 273 mm, D_{c} égal à 106 mm et Dₛ égal à 138 mm), et un ventilateur ayant un débit de 4900 mètres cube d'air par heure à une vitesse, en sortie de ventilateur, d'environ 13 mètres par seconde.

Le ventilateur centrifuge 110 utilisé présente une forte hauteur manométrique totale (HMT), de préférence supérieure ou égale à 0,6 mètre.

Les meilleurs résultats ont été obtenus en plaçant le dispositif de soufflage selon invention de telle sorte que la sortie d'air de chaque buse était à une distance d3 d'environ 1,50 mètre du coeur de l'arbre. Cette distance est donnée par rapport à l'axe de symétrie a₁₃₁-a₁₃₂ des buses (voir figure 5).

Ainsi, lorsque la vitesse de l'air est d'environ 50 mètres par seconde à la sortie de chaque buse, la vitesse n'est plus que d'environ 20 mètres par seconde à 1,50 m de distance selon l'axe longitudinal a₁₃₁-a₁₃₂ des buses.

Une HMT de 0,6 mètres est donc suffisante pour obtenir une vitesse d'air adaptée à environs 1,50 mètre de distance des buses. A dimensions de buses égales, si la distance entre les arbres et les buses est inférieure, le ventilateur utilisé peut présenter une HMT inférieure.

Le dispositif selon l'invention permet donc un secouage des branches par un soufflage puissant obtenu par un ventilateur classique combiné à un moyen d'accélération de l'air.

Le mouvement circulaire continu du flux d'air assure une récolte continue des fruits ayant atteint leur pleine maturité, sans aucun dommage pour les arbres ni les feuilles.

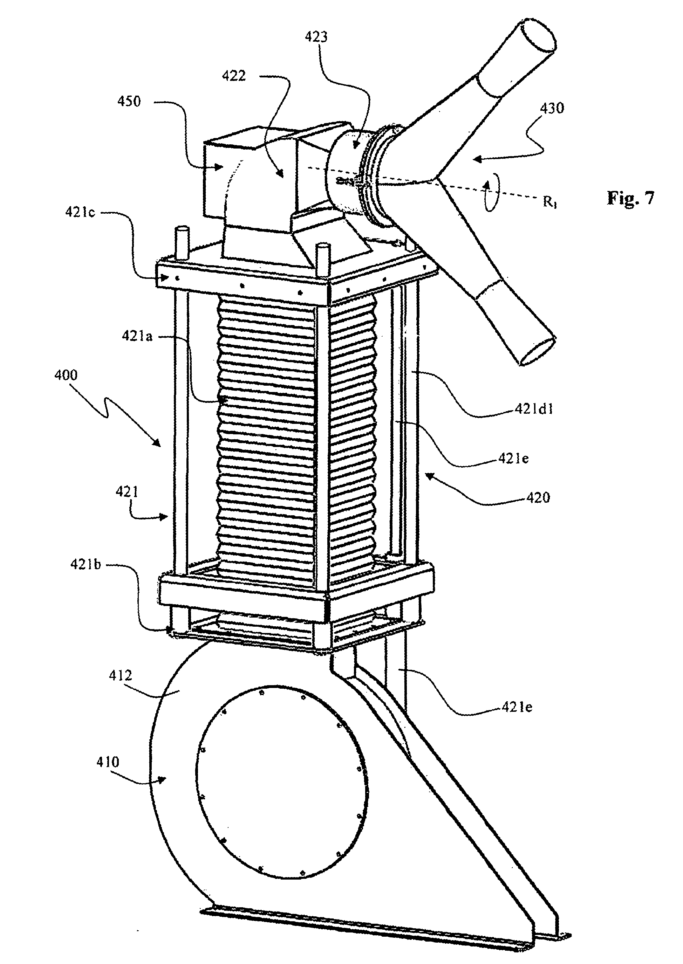

Une variante 400 du dispositif de soufflage selon l'invention, illustrée en figure 7, comprend un conduit d'air 420 réglable en hauteur. Le conduit d'air 420 est connecté, d'une part, à un ventilateur 410 et d'autre part, à une tête de soufflage 430, montée rotative continue autour d'un axe de rotation R₁.

La tête de soufflage 430 est en prise avec un arbre d'entraînement (non visible sur la figure car agencé de la même manière qu'en figure 4) relié à un moteur 450, de telle sorte que la tête de soufflage puisse tourner de manière continue.

Ce moteur 450 est, de manière préférentielle, indépendant du moteur d'entraînement du ventilateur 410. Il n'existe donc, dans ce cas, aucune transmission entre le moteur d'entraînement du ventilateur 410 et l'arbre d'entraînement de la tête de soufflage 430. Le moteur 450 peut être électrique.

De manière préférentielle, le ventilateur 410 est de type centrifuge. Il comprend une roue (non visible sur la figure 7) entrainée par un moteur et un carter de diffusion 412 connecté au conduit d'air 420.

Le conduit d'air 420, illustré en figure 7, comprend une première portion 421, sensiblement perpendiculaire à l'axe de rotation de la roue du ventilateur 410, et connectée avec le carter 412 pour canaliser l'air issu du ventilateur 410.

Le conduit d'air 420 comprend également une deuxième portion coudée 422, ainsi qu'une troisième portion 423, sensiblement perpendiculaire à la première portion 421, et connectée à la tête de soufflage rotative 430.

La première portion 421 comprend une partie tubulaire souple 421a, ici en forme de soufflet. Elle est fixée de manière étanche à son extrémité inférieure 421 b, en position d'utilisation, au carter 412 du ventilateur 410. L'extrémité supérieure de la partie souple 421 a est fixée, de manière étanche, à la portion coudée 422. De manière préférentielle, cette fixation est faite par l'intermédiaire d'une plaque de support 421 c.

La deuxième extrémité de la partie tubulaire souple 421 a est montée coulissante sur une structure de guidage 421d, par l'intermédiaire de la plaque de support 421 c. Dans l'exemple illustré, la structure de guidage est constituée par quatre tiges 421d1 fixées au carter 412. Cet agencement permet de modifier la position relative de la première et de la deuxième extrémité de la partie tubulaire souple.

Un moyen de réglage 421e permet de régler la position en hauteur de l'extrémité supérieure de la partie souple 421 a, fixée à la plaque de support 421c, par rapport à l'extrémité inférieure de la partie souple, fixée au carter 412. Le moyen de réglage ici représenté est un vérin hydraulique pouvant être commandé par le circuit hydraulique du tracteur.

Cette deuxième variante permet d'adapter la hauteur du dispositif de soufflage selon l'invention en fonction de la hauteur des arbres, sans avoir à démonter et changer le conduit d'air. La commande du moyen de réglage en hauteur peut être soit manuelle, soit automatique (par exemple contrôlée par un capteur de la hauteur de l'arbre).

Il est possible de récolter efficacement les fruits d'arbres de hauteurs différentes de plusieurs parcelles, au sein d'une même parcelle, voire au sein d'une même rangée.

En position d'utilisation, la première portion 421 est sensiblement verticale, la troisième portion 423 est sensiblement horizontale et le dispositif de soufflage 400 est agencé de telle sorte que la tête de soufflage 430 soit dirigée vers l'arbre A.

Dans le mode de réalisation illustré, la portion coudée 422 présente une section carrée. Une pièce d'adaptation, de type « profilé rond-carré » est agencée entre la portion coudée et la section circulaire de la troisième portion 423 pour permettre la rotation de la tête de soufflage. Cette pièce d'adaptation est, dans l'exemple illustré, elle-même convergente pour accélérer l'air.

De nombreuses variantes et alternatives peuvent être apportées sans pour cela sortir de l'invention et notamment :
- la tête de soufflage peut être munie, par exemple, de trois buses voire plus. Les buses doivent être agencées de manière divergente par rapport à l'axe de rotation R₁ et agencées les unes par rapport aux autres pour que l'air provenant du conduit d'air soit réparti de manière sensiblement égale entre les buses tout en limitant la perte de charge. Par exemple, si la tête de soufflage comprend trois buses, elles doivent être disposées en trépied.
- le châssis peut comprendre des bras pivotants 210 munis de filets de récolte 220. Ces bras peuvent être télescopiques ;
- le châssis peut comprendre un moteur d'entraînement du ventilateur, indépendant du véhicule de tractage. Celui-ci peut, alors, être dépourvu d'une prise de force. Cependant, le moteur et le ventilateur devraient être agencés pour optimiser le rendement de transmission entre le moteur et le ventilateur tout en minimisant les pertes de charge du flux d'air.

## Revendications

1. Dispositif de soufflage pour la récolte de fruits portés par le branchage d'arbres fruitiers, comprenant un ventilateur (110) connecté à un conduit d'air tubulaire (120) le conduit d'air (120) est terminé par une tête de soufflage (130), montée rotative autour d'un axe de rotation (R₁), et munie d'au moins une buse (131-132) comprenant une entrée d'admission d'air (131a-132a) provenant du conduit d'air (120), un tube (131b-132b) et une sortie d'air (131c-132c), le dispositif comprenant entre le ventilateur et la sortie d'air de la buse, au moins une structure convergente (123a, 131b1, 132b1) d'accélération de l'air, **caractérisé en ce que,** lorsque la tête de soufflage tourne, l'air est expulsé vers les arbres selon un mouvement rotatif continu et dirigé vers l'arbre.

2. Dispositif de soufflage selon la revendication 1, dans lequel ladite au moins une buse (131-132) est agencée de manière divergente par rapport à l'axe de rotation (R₁) pour diriger l'air, en utilisation, sur sensiblement toute la hauteur et la largeur du branchage.

3. Dispositif de soufflage selon l'une quelconque des revendications 1 ou 2, dans lequel le tube (131b-132b) de la buse comprend une section convergente (131b1-132b1).

4. Dispositif de soufflage selon l'une quelconque des revendications 1 à 3, dans lequel le tube de la buse comprend une section divergente (131 b2-132b2).

5. Dispositif de soufflage selon l'une quelconque des revendications 1 à 4, dans lequel l'entrée d'admission d'air (131a-132a) de la ou de chaque buse est disposée au plus près de l'axe de rotation (R₁) de la tête de soufflage (130).

6. Dispositif de soufflage selon l'une quelconque des revendications 1 à 5, dans lequel le ventilateur (110) est de type centrifuge et comprend une roue (111), montée rotative selon un axe de rotation (R₂), et un carter de diffusion (112) connecté au conduit d'air (120).

7. Dispositif de soufflage selon la revendication 6, destiné à être actionné par une prise de force d'un tracteur, dans lequel le ventilateur (110) est agencé pour que, en utilisation, l'axe de rotation (R₂) de la roue (111) du ventilateur (110) soit sensiblement parallèle à l'axe de rotation de la prise de force du tracteur.

8. Dispositif de soufflage selon la revendication 7, dans lequel le conduit d'air (120, 420) comprend une première portion (121, 421), sensiblement perpendiculaire à l'axe de rotation (R₂) de la roue (111) du ventilateur (110, 410) et connectée avec le carter (112, 412), une deuxième portion coudée (122, 422) ainsi qu'une troisième portion (123, 423), sensiblement perpendiculaire à la première portion (121, 421) et connectée à la tête de soufflage rotative (130, 430).

9. Dispositif de soufflage selon la revendication 8, dans lequel la première portion (421) comprend une partie tubulaire souple (421 a), fixée de manière étanche, par une première extrémité, au carter (412) du ventilateur (410) et, par une deuxième extrémité, à la deuxième portion coudée (422), la deuxième extrémité de la partie tubulaire souple (421a) étant montée coulissante sur une structure de guidage (421d), pour modifier la position relative de la première et de la deuxième extrémité de la partie tubulaire souple (421 a).

10. Dispositif de soufflage selon la revendication 9, dans lequel la partie tubulaire souple (421 a) est un soufflet.

11. Dispositif de soufflage selon l'une quelconque des revendications 8 à 10, comprenant, en outre, un moyen de réglage (421e) de la position relative de la première et de la deuxième extrémité de la partie tubulaire souple (421 a).

12. Dispositif de soufflage selon l'une quelconque des revendications 8 à 11, dans lequel la première portion (121) du conduit d'air (120) est connectée au carter (112) du ventilateur (110) de manière rotative.

13. Dispositif de soufflage selon l'une quelconque des revendications 8 à 12, dans lequel la troisième portion (121) du conduit d'air (120) comprend une structure convergente (123a).

14. Dispositif de soufflage selon l'une quelconque des revendications 1 à 13, dans lequel la tête de soufflage rotative (130) est en prise avec un arbre d'entrainement (140), coaxial avec l'axe de rotation (R₁) de la tête de soufflage (130), et entrainé par un moteur (150).

15. Système de soufflage comprenant un dispositif de soufflage selon l'une quelconque des revendications 1 à 14, disposé sur un châssis (200) muni de roues (300) et d'un moyen de fixation à un véhicule de tractage.

16. Système de soufflage selon la revendication 15, dans lequel le châssis comprend des bras pivotants (210) munis de filets de récolte (220).

17. Système de soufflage selon la revendication 16, dans lequel les bras (210) sont télescopiques.

18. Système de soufflage selon l'une quelconque des revendications 15 à 17, dans lequel le châssis (200) comprend un moteur d'entraînement du ventilateur (110).

## Claims

1. Blower device for harvesting fruit borne on fruit tree branches, comprising a blower (110) connected to a tubular air duct (120), which air duct (120) is terminated by a blower head (130) mounted so as to rotate about an axis of rotation (R₁) and fitted with at least one nozzle (131-132) comprising an air intake inlet (131 a-132a) leading from the air duct (120), a tube (131b-132b) and an air outlet (131c-132c), the device incorporating at least one convergent air acceleration structure (123a, 131b1, 132b1) between the blower and the air outlet of the nozzle, **characterised in that** when the blower head is rotating, air is ejected towards the trees in a continuous rotating movement directed towards the tree.

2. Blower device as claimed in claim 1, in which said at least one nozzle (131-132) is arranged in a divergent manner with reference to the axis of rotation (R₁) in order to direct the air essentially across the entire height and width of the branches during use.

3. Blower device as claimed in any one of claims 1 or 2, in which the tube (131b-132b) of the nozzle has a convergent cross-section (131b1-132b1).

4. Blower device as claimed in any one of claims 1 to 3, in which the tube of the nozzle has a divergent cross-section (131 b2-132b2).

5. Blower device as claimed in any one of claims 1 to 4, in which the air intake inlet (131a-132a) of the or each nozzle is disposed as close as possible to the axis of rotation (R₁) of the blower head (130).

6. Blower device as claimed in any one of claims 1 to 5, in which the blower (110) is of the centrifuge type and comprises a wheel (111) mounted so as to rotate on an axis of rotation (R₂) and a diffusion housing (112) connected to the air duct (120).

7. Blower device as claimed in claim 6, designed to be activated by a power take-off of a tractor, in which the blower (110) is disposed so that the axis of rotation (R₂) of the wheel (111) of the blower (110) during use is substantially parallel with the axis of rotation of the power take-off of the tractor.

8. Blower device as claimed in claim 7, in which the air duct (120, 420) comprises a first portion (121, 421) substantially perpendicular to the axis of rotation (R₂) of the wheel (111) of the blower (110, 410) and connected to the housing (112, 412), a second bent portion (122, 422) and a third portion (123, 423) substantially perpendicular to the first portion (121, 421) and connected to the rotating blower head (130, 430).

9. Blower device as claimed in claim 6, in which the first portion (421) comprises a flexible tubular part (421 a) secured to the housing (412) of the blower (410) in a sealed arrangement by a first end and to the second bent portion (422) by a second end, the second end of the flexible tubular part (421a) being mounted so as to slide on a guide structure (421d) in order to modify the relative position of the first and second end of the flexible tubular part (421a).

10. Blower device as claimed in claim 9, in which the flexible tubular part (421 a) is a bellows.

11. Blower device as claimed in any one of claims 8 to 10, further comprising a means (421 e) for adjusting the relative position of the first and second end of the flexible tubular part (421 a).

12. Blower device as claimed in any one of claims 8 to 11, in which the first portion (121) of the air duct (120) is connected to the housing (112) of the blower (110) in a rotating arrangement.

13. Blower device as claimed in any one of claims 8 to 12, in which the third portion (121) of the air duct (120) has a convergent structure (123a).

14. Blower device as claimed in any one of claims 1 to 13, in which the rotating blower head (130) is connected to a drive shaft (140) disposed coaxially with the axis of rotation (R₁) of the blower head (130) and driven by a motor (150).

15. Blower system comprising a blower device as claimed in any one of claims 1 to 14 disposed on a chassis (200) equipped with wheels (300) and a means for providing an attachment to a towing vehicle.

16. Blower system as claimed in claim 15, in which the chassis has pivoting arms (210) equipped with harvesting nets (220).

17. Blower system as claimed in claim 16, in which the arms (210) are telescopic.

18. Blower system as claimed in any one of claims 15 to 17, in which the chassis (200) has a drive motor for the blower (110).

## Patentansprüche

1. Blasvorrichtung zur Ernte von Früchten, welche vom Geäst von Obstbäumen getragen sind, umfassend ein Gebläse (110), welches mit einer röhrenartigen Luftleitung (120) verbunden ist, wobei die Luftleitung (120) durch einen Blaskopf (130) abgeschlossen ist, welcher drehbar um eine Drehachse (R₁) angebracht ist, und mit wenigstens einer Düse (131-132) versehen ist, welche einen Eingang (131a-132a) zur Aufnahme von aus der Luftleitung (120) kommender Luft, ein Rohr (131b-132b) und einen Luftausgang (131c-132c) aufweist, wobei die Vorrichtung zwischen dem Gebläse und dem Luftausgang der Düse wenigstens eine zusammenlaufende Struktur (123a, 131b1, 132b1) zur Beschleunigung der Luft aufweist, **dadurch gekennzeichnet, dass**, wenn der Blaskopf sich dreht, die Luft gemäß einer kontinuierlichen und in Richtung des Baums gerichteten Drehbewegung ausgestoßen wird.

2. Blasvorrichtung nach Anspruch 1, wobei die wenigstens eine Düse (131-132) auf bezüglich der Drehachse (R₁) auseinanderlaufende Weise angeordnet ist, um im Betrieb die Luft auf im Wesentlichen die gesamte Höhe und Breite des Geästs zu richten.

3. Blasvorrichtung nach einem beliebigen der Ansprüche 1 oder 2, wobei das Rohr (131b, 132b) der Düse einen zusammenlaufenden Abschnitt (131b1-132b1) aufweist.

4. Blasvorrichtung nach einem beliebigen der Ansprüche 1-3, wobei das Rohr der Düse einen auseinanderlaufenden Abschnitt (131b2-132b2) aufweist.

5. Blasvorrichtung nach einem beliebigen der Ansprüche 1-4, wobei der Eingang (131a-132a) zur Aufnahme von Luft möglichst nah an der Drehachse (R₁) des Blaskopfes (130) angeordnet ist.

6. Blasvorrichtung nach einem beliebigen der Ansprüche 1-5, wobei das Gebläse (110) vom Zentrifugaltyp ist und ein Rad (111) aufweist, welches drehbar um eine Drehachse (R₂) angebracht ist, und ein mit der Luftleitung (120) verbundenes Diffusionsgehäuse (112) aufweist.

7. Blasvorrichtung nach Anspruch 6, welche dazu bestimmt ist, durch eine Zapfwelle eines Traktors betätigt zu werden, wobei das Gebläse (110) derart angeordnet ist, dass im Betrieb die Drehachse (R₂) des Rads (111) des Gebläses (110) im Wesentlichen parallel zu der Drehachse der Zapfwelle des Traktors ist.

8. Blasvorrichtung nach Anspruch 7, wobei die Luftleitung (120, 420) einen ersten Abschnitt (121, 421), welcher im Wesentlichen senkrecht zu der Drehachse (R₂) des Rads (111) des Gebläses (110, 410) und mit dem Gehäuse (112, 412) verbunden ist, einen gebogenen zweiten Abschnitt (112, 422) sowie einen dritten Abschnitt (123, 423), welcher im Wesentlichen senkrecht zu dem ersten Abschnitt (121, 421) und mit dem drehbaren Blaskopf (130, 430) verbunden ist, aufweist.

9. Blasvorrichtung nach Anspruch 8, wobei der erste Abschnitt (421) einen flexiblen röhrenartigen Teil (421a) aufweist, welcher auf abdichtende Weise durch ein erstes Ende an dem Gehäuse (412) des Gebläses (410) und durch ein zweites Ende an dem gebogenen zweiten Abschnitt (422) befestigt ist, wobei das zweite Ende des röhrenartigen flexiblen Teils (921a) verschiebbar an einer Führungsstruktur (921d) angebracht ist, um die relative Position des ersten und des zweiten Endes des flexiblen röhrenartigen Teils (421a) zu modifizieren.

10. Blasvorrichtung nach Anspruch 9, wobei der flexible röhrenartige Teil (421a) ein Balg ist.

11. Blasvorrichtung nach einem beliebigen der Ansprüche 8-10, umfassend außerdem ein Mittel zur Einstellung (421e) der relativen Position des ersten und des zweiten Endes des röhrenartigen flexiblen Teils (421a).

12. Blasvorrichtung nach einem beliebigen der Ansprüche 8-11, wobei der erste Abschnitt (121) der Luftleitung (120) auf drehbare Weise mit dem Gehäuse (112) des Gebläses (110) verbunden ist.

13. Blasvorrichtung nach einem beliebigen der Ansprüche 8-12, wobei der dritte Abschnitt (121) der Luftleitung (120) eine zusammenlaufende Struktur (123a) umfasst.

14. Blasvorrichtung nach einem beliebigen der Ansprüche 1-13, wobei der drehbare Blaskopf (130) im Eingriff mit einer Antriebswelle (140) ist, welche koaxial mit der Drehachse (R₁) des Blaskopfes (130) und durch einen Motor (150) angetrieben ist.

15. Blassystem, welches eine Blasvorrichtung nach einem beliebigen der Ansprüche 1-14 umfasst, welche auf einem Fahrgestell (200) angeordnet ist, welches mit Rädern (300) und einem Mittel zur Befestigung an einem Zugfahrzeug versehen ist.

16. Blassystem nach Anspruch 15, wobei das Fahrgestell schwenkbare Arme (210) umfasst, welche mit Erntenetzen (220) versehen sind.

17. Blassystem nach Anspruch 16, wobei die Arme (210) teleskopisch sind.

18. Blassystem nach einem beliebigen der Ansprüche 15-17, wobei das Fahrgestell (200) einen Motor zum Antrieb des Gebläses (110) umfasst.
